# EUROPEAN PATENT APPLICATION

(11) **EP 4 765 441 A1**
(43) Date of publication of application: **24.06.2026**
(21) Application number: 25209366.1
(22) Date of filing: 17.10.2025
(51) Int. Cl.: H01M 50/517, H01M 50/528, H01M 50/536, H01M 50/54, H01M 50/55, H01M 50/553, H01M 50/552, H01M 50/566

(54) **SECONDARY BATTERY AND BATTERY PACK INCLUDING THE SAME**

(30) Priority: 23.12.2024 KR 20240194290
(71) Applicant: SAMSUNG SDI CO., LTD., Yongin-si, Gyeonggi-do 17084 (KR)
(72) Inventor: Kim, Sang Won, 16678 Gyeonggi-do, Suwon-si (KR); Jung, Yeon Ho, 16678 Gyeonggi-do, Suwon-si (KR); Baek, Soo Min, 16678 Gyeonggi-do, Suwon-si (KR)
(74) Representative: Meissner Bolte Partnerschaft mbB

(57) **Abstract**

A secondary battery and a battery pack are disclosed. A secondary battery includes a case having an opening, an electrode assembly accommodated in the case, an electrode tab electrically connected to the electrode assembly, a cap plate to close the opening, a terminal including a terminal body passing through the cap plate, and a plate coupling portion located inside the case and connected to the terminal body, and a connection plate including an electrode tab coupling portion welded to the electrode tab, and a terminal coupling portion welded to the plate coupling portion.

## Description

### BACKGROUND

### 1. Field

The present invention relates to a secondary battery and a battery pack including the same.

### 2. Description of the Related Art

In general, with the rapid spread of electronic devices using batteries, such as mobile phones, notebook computers, and electric vehicles, the demand for secondary batteries with high energy density and high capacity has rapidly increased. Accordingly, research and development for improving the performance of lithium secondary batteries is being actively conducted.

A lithium secondary battery is a battery which includes a positive electrode and a negative electrode material, each of which includes an active material capable of intercalating and deintercalating lithium ions and an electrolyte and in which electrical energy is produced through oxidation and reduction reactions when lithium ions are intercalated/deintercalated into/from the positive electrode and the negative electrode.

The aforementioned information disclosed in this background section is provided for enhancement of understanding of the background technology of the present invention, and therefore may contain information that does not constitute the related art.

### SUMMARY OF THE INVENTION

The present invention concerns a secondary battery in which electrical resistance is reduced in a current path from an electrode assembly to a busbar during charging/discharging, and a battery pack including the same.

However, aspects and technical objectives to be achieved by the present invention are not limited to the above-described aspects and objectives, and other aspects and objectives, which are not described above, will be clearly understood by those skilled in the art through the following description of the invention.

The present invention concerns a secondary battery including a case having an opening, an electrode assembly accommodated in the case, an electrode tab electrically connected to the electrode assembly, a cap plate to close the opening, a terminal including a terminal body passing through the cap plate, and a plate coupling portion located inside the case and connected to the terminal body, and a connection plate including an electrode tab coupling portion welded to the electrode tab, and a terminal coupling portion welded to the plate coupling portion.

A shape of the terminal body may be a tubular shape, and the terminal body may have an end portion which is closed and blocked by the plate coupling portion inside the case, and another end portion which is located outside the case and opens to the outside of the case.

The terminal may include a female screw pattern on an inner circumferential surface of the terminal body.

The terminal may further include a flange portion extending radially from the another end portion of the terminal body.

Another aspect of the present invention concerns a battery pack including a housing, and a plurality of secondary batteries accommodated in the housing, wherein each of the secondary batteries includes a case having an opening, an electrode assembly accommodated in the case, a first electrode tab connected to the electrode assembly, a cap plate to close the opening, a first terminal including a first terminal body passing through the cap plate, and a first plate coupling portion located inside the case and connected to the first terminal body, and a first connection plate including a first electrode tab coupling portion welded to the first electrode tab, and a first terminal coupling portion welded to the first plate coupling portion.

The secondary battery may further include a first weld which is formed by partially melting and integrally curing the first plate coupling portion and the first terminal coupling portion and extends along a closed curve path.

The secondary battery may further include a second electrode tab connected to the electrode assembly, a second terminal including a second terminal body passing through the cap plate and a second plate coupling portion located inside the case and connected to the second terminal body, and a second connection plate including a second electrode tab coupling portion welded to the second electrode tab and a second terminal coupling portion welded to the second plate coupling portion, and the battery pack may further include a busbar to connect the first terminal of a first secondary battery of the plurality of secondary batteries to the second terminal of a second secondary battery of the plurality of secondary batteries.

The secondary battery may further include a second weld which is formed by partially melting and integrally curing the second plate coupling portion and the second terminal coupling portion and extends along a closed curve path.

The battery pack may further include a first coupling bolt which passes through a side of the busbar and is coupled to the first terminal such that the busbar is electrically connectable to the first terminal.

A shape of the first terminal body may be a tubular shape, and the first terminal body may have an end portion which is closed and blocked by the first plate coupling portion inside the case, and another end portion which is located outside the case and opens to the outside of the case.

The first terminal may include a first female screw pattern on an inner circumferential of the first terminal body, and the first coupling bolt may include a first bolt body including a first male screw pattern configured to engage with the first female screw pattern, and a first bolt head which is connected to the first bolt body in a stepwise manner and configured to press the side of the busbar to be in contact (e.g., close contact) with the first terminal.

The battery pack may further include a second coupling bolt which passes through another side of the busbar and is coupled to the second terminal such that the busbar is electrically connectable to the second terminal.

A shape of the second terminal body may be a tubular shape, and the second terminal body may have an end portion which is closed and blocked by the second plate coupling portion inside the case, and another end portion which is located outside the case and opens to the outside of the case.

The second terminal may include a second female screw pattern on an inner circumferential of the second terminal body, and the second coupling bolt may include a second bolt body including a second male screw pattern configured to engage with the second female screw pattern, and a second bolt head which is connected to the second bolt body in a stepwise manner and configured to press the another side of the busbar to be in contact (e.g., close contact) with the second terminal.

The first coupling bolt may include a bolt core including a steel material, and a conduction promotion layer which is stacked to surround the bolt core and includes a material having higher conductivity than the steel material.

### BRIEF DESCRIPTION OF THE DRAWINGS

The above and other aspects, objects, features, and advantages of the present invention will become more apparent to those of ordinary skill in the art by describing some embodiments thereof in further detail with reference to the accompanying drawings, in which:
FIG. 1 is a schematic exploded perspective view illustrating a configuration of a battery pack according to an embodiment of the present invention;
FIG. 2 is a schematic perspective view illustrating a configuration of a secondary battery of FIG. 1;
FIG. 3 is a cross-sectional view along the line S1-S1 in an assembled state of a battery pack of FIG. 1;
FIG. 4 is a schematic view illustrating a configuration of an electrode assembly according to an embodiment of the present invention;
FIG. 5 is an enlarged cross-sectional view of a region "A" of FIG. 3;
FIG. 6 is an enlarged cross-sectional view of a region "B" of FIG. 3;
FIG. 7 is a perspective top view illustrating a first terminal or a second terminal of FIG. 1;
FIG. 8 is a perspective bottom view illustrating the first terminal or the second terminal of FIG. 1; and
FIG. 9 is an enlarged cross-sectional view of a coupling bolt of FIG. 1.

### DETAILED DESCRIPTION

Herein, some embodiments of the present invention will be described, in further detail, with reference to the accompanying drawings. The terms or words used in this specification and claims are not to be construed as being limited to the usual or dictionary meaning and are to be interpreted as having meaning and concept consistent with the technical idea of the present invention based on the principle that the inventor can be his/her own lexicographer to appropriately define the concept of the term.

The embodiments described in this specification and the configurations shown in the drawings are provided as some example embodiments of the present invention and do not necessarily represent all of the technical ideas, aspects, and features of the present invention. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present invention and are not intended to limit the present invention.

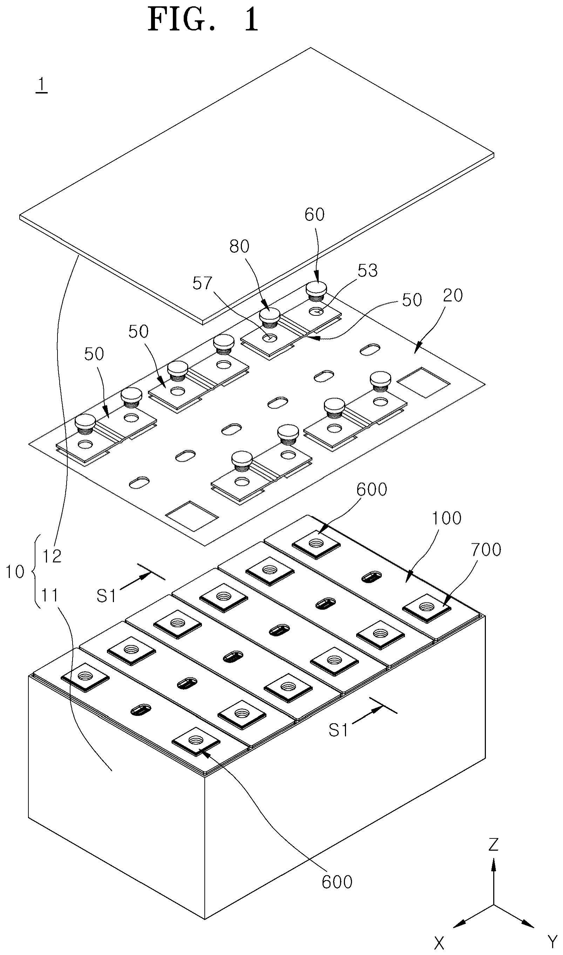

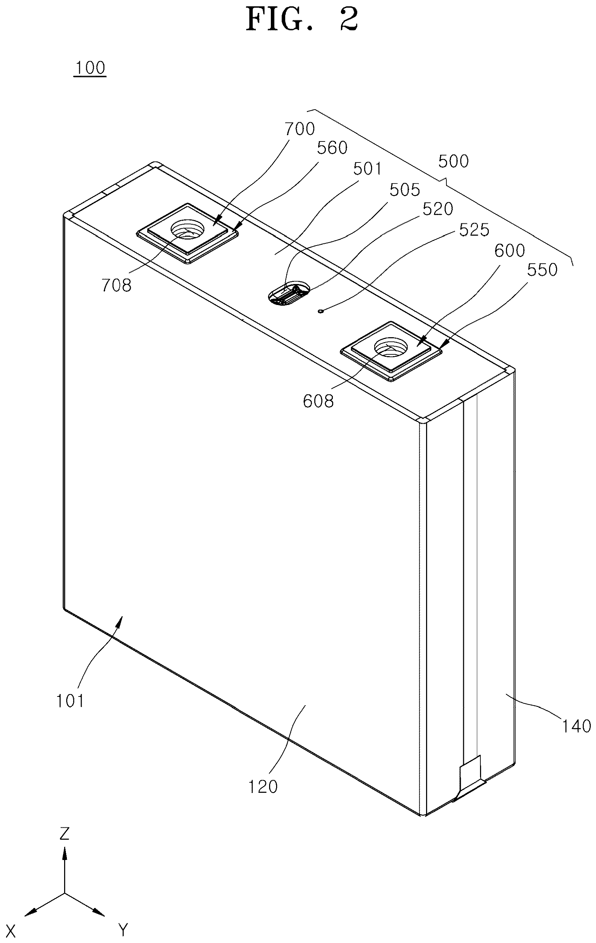

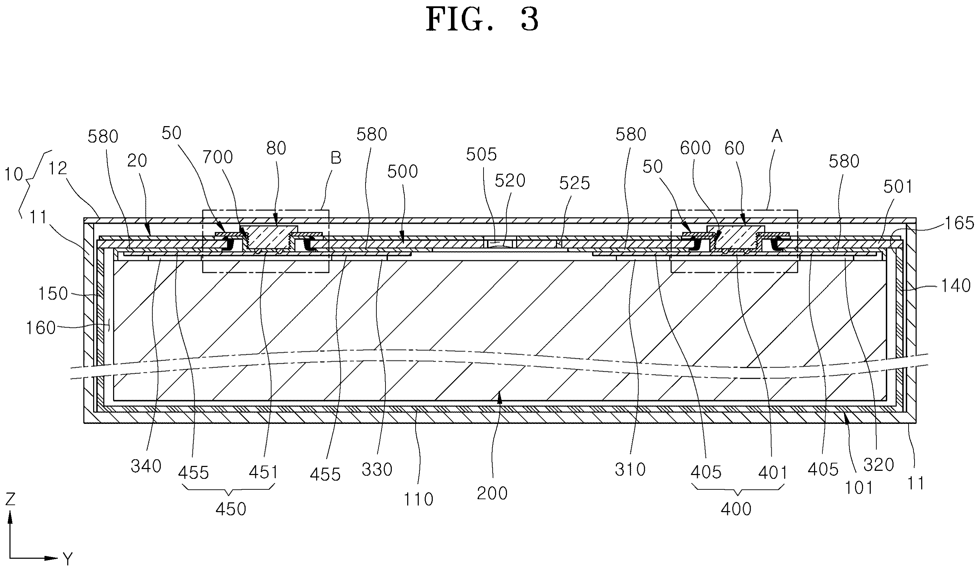

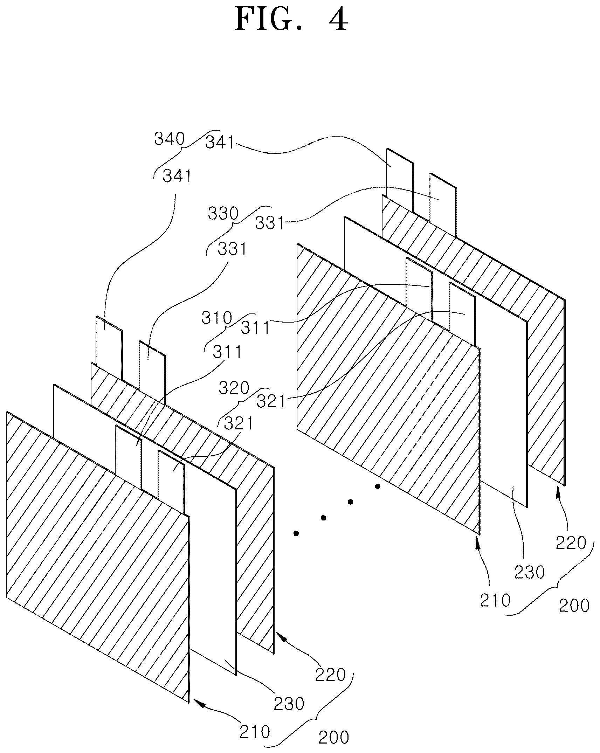

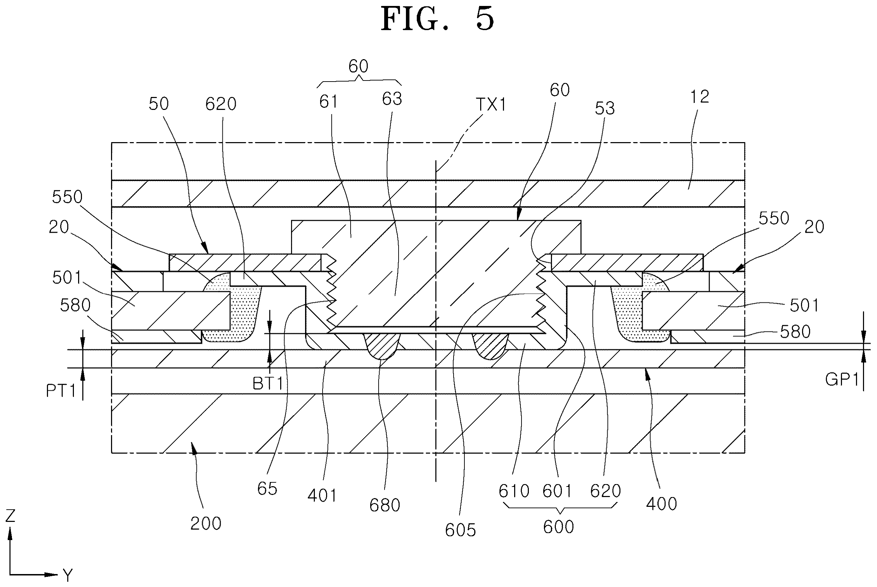

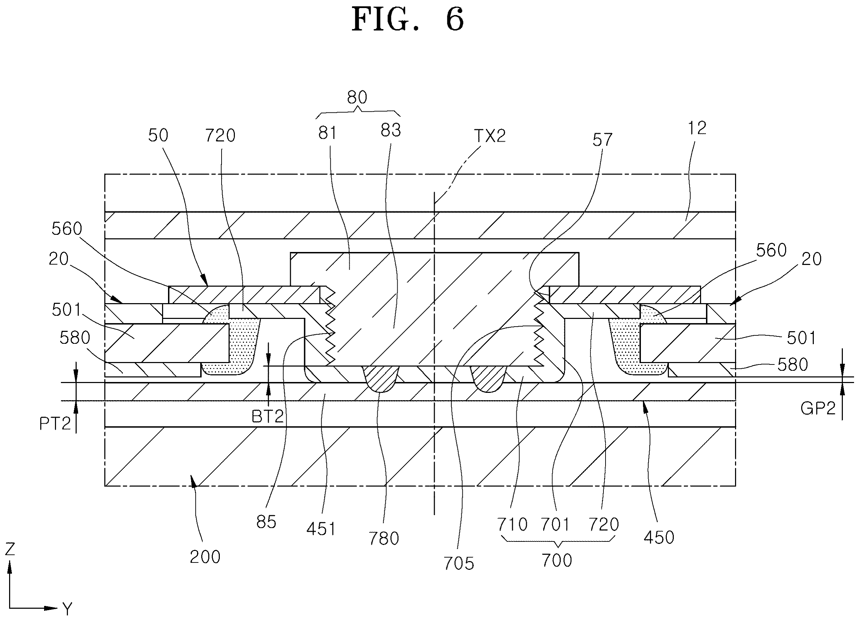

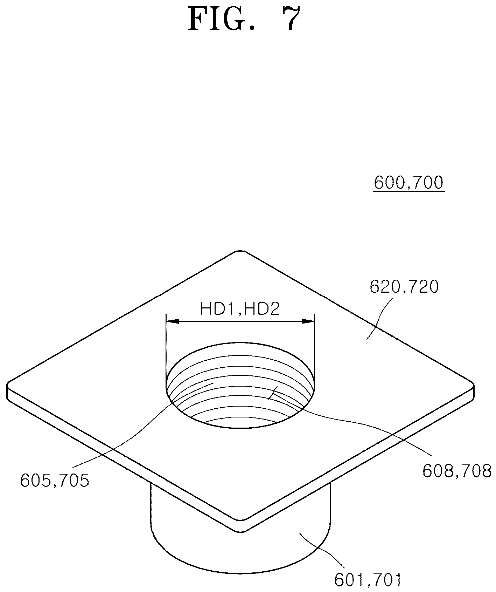

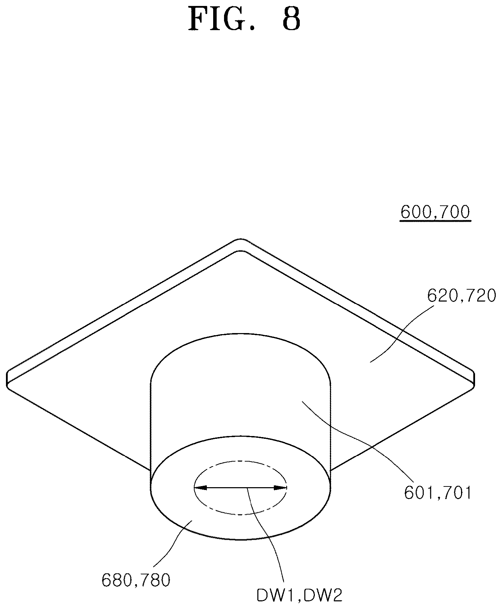

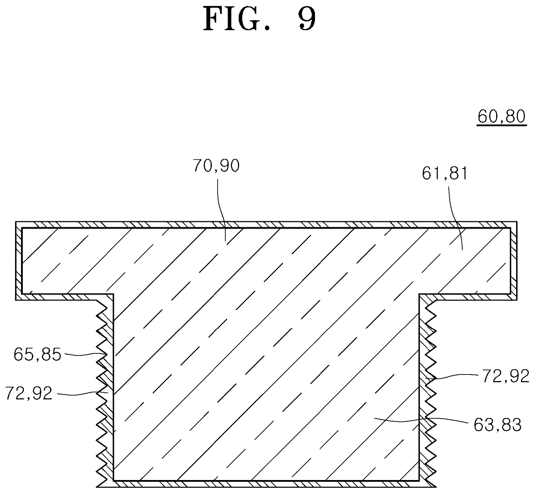

FIG. 1 is a schematic exploded perspective view illustrating a configuration of a battery pack according to an embodiment of the present invention. FIG. 2 is a schematic perspective view illustrating a configuration of a secondary battery of FIG. 1. FIG. 3 is a cross-sectional view along the line S1-S1 in an assembled state of the battery pack of FIG. 1. FIG. 4 is a schematic view illustrating a configuration of an electrode assembly according to an embodiment of the present invention. FIG. 5 is an enlarged cross-sectional view of a region "A" of FIG. 3. FIG. 6 is an enlarged cross-sectional view of a region "B" of FIG. 3. FIG. 7 is a perspective top view illustrating a first terminal or a second terminal of FIG. 1. FIG. 8 is a perspective bottom view illustrating the first terminal or the second terminal of FIG. 1. FIG. 9 is an enlarged cross-sectional view of a coupling bolt of FIG. 1.

Referring to FIG. 1, a battery pack 1 according to an embodiment of the present invention includes a housing 10, a secondary battery 100, and a busbar 50.

The housing 10 may form a schematic exterior of the battery pack 1 and may provide a space in which the secondary battery 100 may be accommodated.

The housing 10 according to an embodiment may include a housing body 11 and a cover 12. The housing body 11 may be formed to have a hollow box shape with an open side. However, a cross-sectional shape of the housing body 11 is not limited to a quadrangular shape, as shown in FIG. 1, and may have any of various shapes, such as a polygonal shape, a circular shape, and an oval shape.

The cover 12 may be coupled to the housing body 11 and may close an internal space of the housing body 11. As an example, the cover 12 may be formed to have a generally plate shape and may be disposed to face the open side of the housing body 11. The cover 12 may be fixed to the housing body 11 through any of various types of coupling methods including bolting, welding, fitting, and the like.

The secondary battery 100 may function as a unit structure that stores and supplies power in the battery pack 1. Herein, an example in which the secondary battery 100 is a lithium ion secondary battery as a prismatic secondary battery will be described. However, the present invention is not limited thereto, and the secondary battery may be a lithium polymer battery or a cylindrical battery, for example.

A plurality of secondary batteries 100 may be provided. In an embodiment, the plurality of secondary batteries 100 may be disposed in two or more columns in at least one direction of a longitudinal direction of the housing 10 (e.g., an X-axis direction in FIG. 1) or a width direction of the housing 10 (e.g., a Y-axis direction in FIG. 1). Although FIG. 1 illustrates an example in which the plurality of secondary batteries100 are arranged in six columns in the longitudinal direction of the housing 10, an arrangement form of the plurality of secondary batteries 100 is not limited thereto and may have any of various forms. The plurality of secondary batteries 100 may be disposed parallel to each other. A number of the secondary batteries 100 may be varied in various ways according to the size, shape, and the like of the housing 10.

A first terminal 600 of a secondary battery 100 of a pair of adjacent secondary batteries 100 may be disposed to face a second terminal 700 of the other secondary battery 100 of the pair of adjacent secondary batteries 100 in the longitudinal direction of the housing 10. That is, a front portion 120 (see FIG. 2) of a battery 100 of adjacent secondary batteries 100 may be disposed to face a rear portion of the other secondary battery 100 of the adjacent secondary batteries 100.

The battery pack 1 may further include the busbar 50 and a busbar holder 20. The busbar 50 connects the first terminal 600 of a secondary battery 100 of the plurality of secondary batteries 100 to the second terminal 700 of another secondary battery 100 of the plurality of secondary batteries 100.

The busbar 50 according to an embodiment may be disposed between the cover 12 and the secondary battery 100. A plurality of busbars 50 may be provided. Each busbar 50 may electrically connect a pair of adjacent secondary batteries 100.

A first side of the busbar 50 may be connected to the first terminal 600 of a secondary battery 100 of the pair of adjacent secondary batteries 100, and a second side of the busbar 50 may be connected to the second terminal 700 of the other secondary battery 100 of the pair of adjacent secondary batteries 100.

As an example, among the pair of adjacent secondary batteries 100, the first terminal 600 of one secondary battery 100 may be a positive terminal, and the second terminal 700 of another secondary battery 100 may be a positive terminal that is the same as the first terminal 600 of the one secondary battery 100 or a negative terminal that is different from the first terminal 600 of the one secondary battery 100.

As another example, among the pair of adjacent secondary batteries 100, the first terminal 600 of one secondary battery 100 may be a negative terminal, and the second terminal 700 of another secondary battery 100 may be a negative terminal that is the same as the first terminal 600 of the one secondary battery 100 or a positive terminal that is different from the first terminal 600 of the one secondary battery 100.

If the first terminal 600 of one secondary battery 100 and the second terminal 700 of the other secondary battery 100 are different electrodes, the plurality of secondary batteries 100 of the battery pack 1 may be connected in series. On the other hand, if the first terminal 600 of one secondary battery 100 and the second terminal 700 of the other secondary battery 100 are the same electrode, the plurality of secondary batteries 100 of the battery pack 1 may be connected in parallel.

The busbar 50 may be formed of an electrically conductive material, such as copper, aluminum, or nickel. The plurality of busbars 50 may be supported inside the housing 10 by the busbar holder 20.

The busbar holder 20 according to an embodiment may be formed to have a flat plate shape. The busbar holder 20 may be disposed between the cover 12 and the secondary battery 100. The busbar 50 may be fixed to the busbar holder 20 by any of various types of coupling methods including fitting, bolting, injection coupling, and the like. In an embodiment, the busbar holder 20 may be formed to include an electrically insulating polymer compound material.

Referring to FIGS. 1 to 9, the secondary battery 100 according to an embodiment of the present invention includes a case 101, an electrode assembly 200, first electrode tabs 310 and 320, second electrode tabs 330 and 340, a cap plate 501, a first connection plate 400, a second connection plate 450, the first terminal 600, and the second terminal 700.

The case 101 may form a general exterior of the secondary battery 100 and may accommodate the electrode assembly 200. The case 101 may include a bottom portion 110, the front portion 120, the rear portion, and a pair of side portions 140 and 150.

The bottom portion 110 may form a lower exterior of the case 101 as shown in FIGS. 2 and 3. The bottom portion 110 according to an embodiment may have a rectangular plate shape. The front portion 120, the rear portion (not shown), and the pair of side portions 140 and 150 may form a peripheral exterior of the case 101.

The front portion 120, the rear portion, and the pair of side portions 140 and 150 according to an embodiment may have a plate shape extending upward from an edge of the bottom portion 110 as shown in FIGS. 2 and 3. The front portion 120, the rear portion, and the pair of side portions 140 and 150 may be disposed to surround a space above the bottom portion 110. In an embodiment, the front portion 120, the rear portion, and the pair of side portions 140 and 150 may be disposed to form a rectangular cross-sectional shape.

The front portion 120 and the rear portion may be disposed parallel to each other. Areas of the front portion 120 and the rear portion may be equal to each other. The pair of side portions 140 and 150 may be disposed parallel to each other. Areas of the pair of side portions 140 and 150 may be equal to each other. The areas of the pair of side portions 140 and 150 may be smaller than areas of the front portion 120 and the rear portion.

The case 101 has an opening 165. The opening 165 may be open upward as shown in FIGS. 2 and 3. The opening 165 may connect an internal space 160 of the case 101 and an external space of the case 101 to each other. Accordingly, the case 101 according to an embodiment may have a rectangular parallelepiped shape with an open upper side.

Herein, a width direction of the secondary battery may be a direction crossing the front portion 120 and the rear portion and may be referred to as a first direction. A direction crossing the pair of side portions 140 and 150 may be referred to as a second direction. A direction that is orthogonal to the first and second directions and crosses the bottom portion 110 and the cap plate 501 of the secondary battery may be referred to as a third direction. In FIGS. 1 to 3, 5, and 6, an X-axis may be parallel to the first direction, a Y-axis may be parallel to the second direction, and a Z-axis may be parallel to the third direction.

The electrode assembly 200 is accommodated in the internal space 160 of the case 101. The electrode assembly 200 may function as a unit structure that performs operations of charging and discharging power in a secondary battery 100. The electrode assembly 200 may include a first electrode 210, a second electrode 220, and a separator 230 disposed between the first electrode 210 and the second electrode 220. A plurality of first electrodes 210, a plurality of separators 230, and a plurality of second electrodes 220 may be provided.

Herein, an example in which the electrode assembly 200 has a stack form in which the plurality of first electrodes 210, the plurality of separators 230, and the plurality of second electrodes 220 are sequentially stacked in the second direction will be described. However, the electrode assembly 200 is not limited to such a form and may be formed to have a form in which the first electrodes 210, the separators 230, and the second electrodes 220 are wound clockwise or counterclockwise around a winding axis in a state of being stacked.

The first electrode 210 may function as any one of a positive electrode and a negative electrode of the electrode assembly 200. Herein, an example in which the first electrode 210 is the positive electrode of the electrode assembly 200 will be described. However, the first electrode 210 is not limited thereto, and may function as the negative electrode of the electrode assembly 200.

The first electrode 210 according to an embodiment may be formed to have a form of a foil including a metal material, such as aluminum or an aluminum alloy. A type, size, and shape of the first electrode 210 are not particularly limited as long as the first electrode 210 does not cause chemical changes in a secondary battery and is conductive. A cross-sectional shape of the first electrode 210 may be any of various shapes in addition to a rectangular shape, as shown in FIG. 4.

A plurality of first electrodes 210 may be provided. The plurality of first electrodes 210 may be arranged in the first direction between the front portion 120 and the rear portion of the case 101. A number of first electrodes 210 may be varied according to the charge capacity or the like of the secondary battery 100.

A first active material layer may be applied on at least a portion of the first electrode 210. The first active material layer may be applied on both, or opposite, surfaces of the first electrode 210 or may be applied on only one surface of the first electrode 210.

If the first electrode 210 functions as the positive electrode, the first active material layer may include a positive electrode active material.

The positive electrode active material may be a compound (lithiated intercalation compound) capable of reversibly intercalating and deintercalating lithium. In an embodiment, at least one composite oxide of lithium and a metal selected from cobalt, manganese, nickel, iron, and a combination thereof may be used.

As an example, the positive electrode active material may include at least one selected from lithium-iron-phosphorus oxide (LiFePO₄, LFP), lithium-manganese-iron-phosphorus oxide (LiMnFePO₄, LMFP), and lithium-nickel-cobalt-manganese oxide (LiNiₓCo_{y}Mn_{z}O₂, NCM). Here, 0<x<1, 0<y<1, 0<z<1, and x+y+z=10 may be satisfied. The positive electrode active material may include one selected from LFP, LMFP, and NCM or may include two or all selected from LFP, LMFP, and NCM.

The first active material layer may further include a positive electrode conductive material.

The positive electrode conductive material may impart conductivity to the first active material layer, and any suitable material may be used as the positive electrode conductive material as long as the material does not cause chemical changes and is electrically conductive. Examples of the positive electrode conductive material may include a carbon-based material, such as natural graphite, artificial graphite, carbon black, acetylene black, Ketjen black, carbon fiber, carbon nanofibers, or carbon nanotubes, a metal-based material in the form of a metal powder or metal fiber which contains copper, nickel, aluminum, silver, or the like, a conductive polymer, such as a polyphenylene derivative, or a mixture thereof.

The first active material layer may further include a positive electrode binder.

The positive electrode binder may attach particles constituting the positive electrode active material properly to each other and also attach the positive electrode active material properly to the first electrode 210. Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene (PE), polypropylene (PP), polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If the aqueous binder is used as the positive electrode binder, the aqueous binder may further include a cellulose-based compound capable of imparting viscosity. As the cellulose-based compound, one or more types of carboxymethyl cellulose, hydroxypropylmethyl cellulose, methyl cellulose, and an alkali metal salt thereof may be mixed and used. In an embodiment, as the alkali metal, Na, K, or Li may be used.

The dry binder may include a polymer material capable of being fiberized, for example, polytetrafluoroethylene, polyvinylidene fluoride, a polyvinylidene fluoride-hexafluoropropylene copolymer, polyethylene oxide, or a combination thereof.

Although not shown, the first electrode 210 may include a first uncoated portion which is not coated with the first active material layer. In an embodiment, the first uncoated portion may be disposed at an upper end area of the first electrode 210 disposed to face the opening 165 inside the case 101. However, the first uncoated portion is not limited to such a form and, in an embodiment, may be formed in an entire edge area of the first electrode 210.

The second electrode 220 may function as the other of the positive electrode and the negative electrode of the electrode assembly 200. Herein, an example in which the second electrode 220 is the negative electrode of the electrode assembly 200 will be described. However, the second electrode 220 is not limited thereto and, in an embodiment, may function as the positive electrode of the electrode assembly 200.

A plurality of second electrodes 220 may be provided. The plurality of second electrodes 220 may be arranged in the first direction between the front portion 120 and the rear portion of the case 101. The first electrodes 210 and the second electrodes 220 may be alternately arranged in the first direction. The second electrode 220 may be spaced by a distance (e.g., a predetermined distance) apart from the first electrode 210 in the first direction.

The second electrode 220 may be formed to have a form of a foil including a metal material, such as copper, a copper alloy, nickel, or a nickel alloy. A type, size, and shape of the second electrode 220 are not particularly limited as long as the second electrode 220 does not cause chemical changes in the secondary battery 100 and is conductive. A cross-sectional shape of the second electrode 220 may have any of various shapes in addition to a rectangular shape, as shown in FIG. 4.

A second active material layer may be applied on at least a portion of the second electrode 220. The second active material layer may be applied on both, or opposite, surfaces of the second electrode 220 or may be applied on only one surface of the second electrode 220.

If the second electrode 220 functions as the negative electrode, the second active material layer may include a negative electrode active material.

The negative electrode active material may include a material capable of reversibly intercalating/deintercalating lithium ions, a lithium metal, a lithium metal alloy, a material capable of doping and undoping lithium, or a transition metal oxide.

The material capable of reversibly intercalating/deintercalating lithium ions may include a carbon-based negative electrode active material, for example, crystalline carbon, amorphous carbon, or a combination thereof. Examples of the crystalline carbon may include graphite, such as natural graphite or artificial graphite in an amorphous, plate-like, flake-like, spherical, or fiber-like form. Examples of the amorphous carbon may include soft carbon, hard carbon, mesophase pitch carbide, or calcined coke.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

As the material capable of doping and undoping lithium, a Si-based negative electrode active material or a Sn-based negative electrode active material may be used. The Si-based negative electrode active material may be silicon, a silicon-carbon composite, SiOₓ (0<x≤2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles and amorphous carbon with which surfaces of the silicon particles are coated. For example, the silicon-carbon composite may include a secondary particle (core) formed by bonding primary silicon particles and an amorphous carbon coating layer (shell) located on a surface of the secondary particle. The amorphous carbon may be located between the primary silicon particles, and, thus, for example, the primary silicon particles may be coated with amorphous carbon. The secondary particles may be dispersed and present in an amorphous carbon matrix.

In an embodiment, the silicon-carbon composite may further include crystalline carbon. For example, the silicon-carbon composite may include a core containing crystalline carbon and silicon particles and an amorphous carbon coating layer located on a surface of the core.

The Si-based negative electrode active material or Sn-based negative electrode active material may be used after being mixed with a carbon-based negative electrode active material.

The second active material layer may further include a negative electrode conductive material and a negative electrode binder.

The negative electrode conductive material may impart conductivity to the second active material layer, and any suitable material may be used as the negative electrode conductive material as long as the material does not cause chemical changes and is electronically conductive. Examples of the negative electrode conductive material may include a carbon-based material, such as natural graphite, artificial graphite, carbon black, acetylene black, Ketjen black, carbon fiber, carbon nanofibers, or carbon nanotubes, a metal-based material in the form of a metal powder or metal fiber which contains copper, nickel, aluminum, silver, or the like, a conductive polymer, such as a polyphenylene derivative, or a mixture thereof.

The negative electrode binder may attach particles constituting the negative electrode active material properly to each other and also attach the negative electrode active material properly to the second electrode 220.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, PE, PP, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluorine rubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, phenol resin, an epoxy resin, polyvinyl alcohol, and a combination thereof.

If the aqueous binder is used as the negative electrode binder, the aqueous binder may further include a cellulose-based compound capable of imparting viscosity. As the cellulose-based compound, one or more types of carboxymethyl cellulose, hydroxypropylmethyl cellulose, methyl cellulose, and an alkali metal salt thereof may be mixed and used. In an embodiment, as the alkali metal, Na, K, or Li may be used.

The dry binder may include a polymer material capable of being fiberized, such as polytetrafluoroethylene, polyvinylidene fluoride, a polyvinylidene fluoride-hexafluoropropylene copolymer, polyethylene oxide, or a combination thereof.

The second electrode 220 may include a second uncoated portion which is not coated with the second active material layer. In an embodiment, the second uncoated portion may be disposed at an upper end area of the second electrode 220 disposed to face the opening 165 inside the case 101. However, the second uncoated portion is not limited to such a form and, in an embodiment, may be formed in an entire edge area of the second electrode 220.

The separator 230 may be disposed between the first electrode 210 and the second electrode 220. The separator 230 may prevent or substantially prevent a short circuit between the first electrode 210 and the second electrode 220 while allowing lithium ions to move between the first electrode 210 and the second electrode 220.

In an embodiment, the separator 230 may be disposed to entirely surround a surface area of the electrode assembly 200. Accordingly, the separator 230 may prevent or substantially prevent the first electrode 210 and the second electrode 220 from being directly exposed to the outside of the electrode assembly 200.

As the separator 230, PE, PP, polyvinylidene fluoride, or a multilayer thereof having two or more layers may be used, and a mixed multilayer such as a PE/PP double-layered separator, a PE/PP/PE triple-layered separator, or a PP/PE/PP triple-layered separator may be used.

The separator 230 may include a porous substrate and a coating layer which includes an organic material, an inorganic material, or a combination thereof and is located on one surface or both, or opposite, surfaces of the porous substrate.

The porous substrate may be a polymer film formed of any polymer selected from polyolefin, such as PE or PP, polyester, such as polyethylene terephthalate (PET) or polybutylene terephthalate, polyacetal, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more types thereof.

The organic material may include a polyvinylidene fluoride-based polymer or a (meth)acrylic-based polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic material and the inorganic material may be mixed and present in one coating layer or may be present in a form in which a coating layer including an organic material and a coating layer including an inorganic material are stacked.

The first electrode tabs 310 and 320 and the second electrode tabs 330 and 340 are connected to the electrode assembly 200. The first electrode tabs 310 and 320 may be connected to the first electrode 210 and may protrude outward from the electrode assembly 200. If the first electrode 210 is the positive electrode, the first electrode tabs 310 and 320 may function as positive electrode tabs of the secondary battery 100. However, if the first electrode 210 is the negative electrode, the first electrode tabs 310 and 320 may function as negative electrode tabs of the secondary battery 100.

The first electrode tabs 310 and 32 may extend from the electrode assembly 200 in the third direction. That is, the first electrode tabs 310 and 320 may extend toward the opening 165 inside the case 101. The first electrode tabs 310 and 320 according to an embodiment may include a first inner electrode tab 310 and a first outer electrode tab 320.

The first inner electrode tab 310 and the first outer electrode tab 320 may be spaced apart from each other in the second direction. The first outer electrode tab 320 may be located relatively closer to a first side portion 140 which is disposed closer to the first terminal 600 than the first inner electrode tab 310.

In an embodiment, the first inner electrode tab 310 may be an assembly of a plurality of first inner tabs 311 formed by notching the first uncoated portions of the plurality of first electrodes 210, and the first outer electrode tab 320 may be an assembly of a plurality of first outer tabs 321 formed by notching the first uncoated portions of the plurality of first electrodes 210.

The second electrode tabs 330 and 340 may be connected to the second electrode 220 and may protrude outward from the electrode assembly 200. If the second electrode 220 is the negative electrode, the second electrode tabs 330 and 340 may function as the negative electrode tabs of the secondary battery 100. However, if the second electrode 220 is the positive electrode, the second electrode tabs 330 and 340 may function as the positive electrode tabs of the secondary battery 100.

The second electrode tabs 330 and 340 may extend from the electrode assembly 200 in the third direction. That is, the second electrode tabs 330 and 340 may extend toward the opening 165 inside the case 101.

The first electrode tabs 310 and 320 and the second electrode tabs 330 and 340 may be spaced apart from each other in the second direction. The second electrode tabs 330 and 340 may include a second inner electrode tab 330 and a second outer electrode tab 340.

The second inner electrode tab 330 and the second outer electrode tab 340 may be spaced apart from each other in the second direction. The second outer electrode tab 340 may be located relatively closer to a second side portion 150 which is disposed closer to the second terminal 700 than the second inner electrode tab 330.

In an embodiment, the second inner electrode tab 330 may be an assembly of a plurality of second inner tabs 331 formed by notching the second uncoated portions of the plurality of second electrodes 220, and the second outer electrode tab 340 may be an assembly of a plurality of second outer tabs 341 formed by notching the second uncoated portions of the plurality of second electrodes 220.

The cap plate 501 closes the opening 165 of the case 101. A pair of terminals 600 and 700 are connected to the cap plate 501. The pair of terminals 600 and 700 include the first terminal 600 disposed closer to the first side portion 140 than to the second side portion 150, and the second terminal 700 disposed closer to the second side portion 150 than to the first side portion 140.

The secondary battery 100 further includes a pair of gaskets 550 and 560. The cap plate 501, the pair of terminals 600 and 700, and the pair of gaskets 550 and 560 constitute a cap assembly 500.

The cap assembly 500 may be coupled to the case 101 and may seal the case 101. The cap assembly 500 may be disposed to face the electrode assembly 200 in the third direction.

In an embodiment, the cap plate 501 may be formed to have a generally rectangular flat plate shape. The cap plate 501 may be disposed at a position spaced by a distance (e.g., a predetermined distance) apart from the electrode assembly 200 in the third direction. The cap plate 501 may be disposed parallel to the bottom portion 110 of the case 101. The cap plate 501 may be coupled to the case 101 through any of various types of coupling methods including welding, bolting, fitting, and the like. A pair of terminal through-holes through which the first terminal 600 and the second terminal 700 pass may be formed in the cap plate 501.

The pair of gaskets 550 and 560 may electrically insulate the cap plate 501 from the pair of terminals 600 and 700 and may prevent or substantially prevent moisture or foreign matter from flowing in between the cap plate 501 and the pair of terminals 600 and 700. The pair of gaskets 550 and 560 may include a first gasket 550 and a second gasket 560 to correspond to the first terminal 600 and the second terminal 700.

The pair of gaskets 550 and 560 may include an insulating material. For example, the pair of gaskets 550 and 560 may be formed of an insulating material, such as PE, polypropylene PP, or PET rubber. The pair of gaskets 550 and 560 may be fixed between the cap plate 501 and the pair of terminals 600 and 700 through pressing, injection, bonding, or the like.

The cap assembly 500 according to an embodiment may further include a vent hole 505 and a cell vent 520.

The vent hole 505 may be formed to have a shape of a hole passing through the cap plate 501 in the third direction. The vent hole 505 may provide a path through which flames, gases, smoke, or the like which are formed inside the case 101 if the secondary battery 100 undergoes thermal runaway due to an overcurrent or the like, are discharged to the outside of the case 101. In an embodiment, the vent hole 505 may be disposed between the first terminal 600 and the second terminal 700. A cross-sectional shape of the vent hole 505 may have any of various shapes, such as an oval shape, a circular shape, and a polygonal shape.

The cell vent 520 may be installed in the vent hole 505 and may be opened or closed in response to a change in internal pressure of the case 101. That is, during normal operation of the secondary battery 100, the cell vent 520 may close the vent hole 505 to block an electrolyte or the like inside the case 101 from flowing out of the case 101 or block moisture, foreign matter, or the like from flowing into the case 101. During thermal runaway of the secondary battery 100, the cell vent 520 may open the vent hole 505 to guide flames, gases, smoke, or the like formed inside the case 101 to be discharged to the outside of the case 101.

In an embodiment, the cell vent 520 may have a generally plate shape. The cell vent 520 may be fixed to the cap plate 501 by any of various types of coupling methods including welding, bolting, fitting, and the like. The cell vent 520 may be disposed inside the vent hole 505 or may be disposed to face the vent hole 505 in the third direction at an upper or lower side of the cap plate 501.

In an embodiment, a thickness of the cell vent 520 in the third direction may be smaller than a thickness of the cap plate 501. Accordingly, the cell vent 520 may be easily ruptured or fractured if the internal pressure of the case 101 increases. In an embodiment, the cell vent 520 may include a notch formed to be concave toward the inside of the cell vent 520 so as to be preferentially fractured if the internal pressure of the case 101 increases.

In an embodiment, the cap assembly 500 may further include an electrolyte injection port which is formed to pass through the cap plate 501, and a sealing plug 525 which closes the electrolyte injection port to be openable. The electrolyte injection port may be disposed to be spaced apart from the vent hole 505 in a longitudinal direction of the cap plate 501. In an embodiment, the electrolyte injection port may be disposed between the first terminal 600 and the second terminal 700.

The cap assembly 500 may further include an insulator 580. The insulator 580 may be located between the cap plate 501 and the electrode assembly 200. The insulator 580 may insulate the cap plate 501 from the electrode assembly 200 by preventing or substantially preventing direct contact between the cap plate 501 and the electrode assembly 200. The insulator 580 may fix a position of the electrode assembly 200 inside the case 101. The insulator 580 may prevent or substantially prevent the electrode assembly 200 from being damaged when the cap plate 501 is deformed toward the inside of the case 101 due to an external impact or the like.

The insulator 580 may be disposed to face the electrode assembly 200 in the third direction placed inside the case 101. That is, the electrode assembly 200, the insulator 580, and the cap plate 501 may be sequentially disposed in the third direction.

The insulator 580 may include an insulating material. For example, the insulator 580 may be formed of an insulating material, such as PE, PP, or PET rubber.

The first terminal 600 includes a first terminal body 601 and a first plate coupling portion 610. The first terminal body 601 passes through the cap plate 501. The first plate coupling portion 610 is located in the internal space 160 of the case 101 and is connected to the first terminal body 601.

A shape of the first terminal body 601 may be a pipe shape and may extend in the third direction. In an embodiment, a cross-sectional shape of the first terminal body 601 may be a circular shape. An end portion of the first terminal body 601 may be closed and blocked by the first plate coupling portion 610 inside the case 101. Another end portion of the first terminal body 601 may be located outside the case 101 and may open to the outside of the case 101.

For example, an end portion of the first terminal body 601 may be a lower end portion located at a lower side in the third direction, and the other end portion of the first terminal body 601 may be an upper end portion located at an upper side in the third direction. An open first terminal opening 608 may be formed in the upper end portion of the first terminal body 601.

In an embodiment, a planar shape of the first plate coupling portion 610 may be a circular shape. In an embodiment, the first plate coupling portion 610 may be a flat plate-shaped portion with a constant thickness BT1. The first terminal 600 may further include a first flange portion 620 extending radially from the other end portion of the first terminal body 601.

The first flange portion 620 may be bent at an upper end portion of the first terminal body 601 and may extend in a direction orthogonal to the third direction without closing the first terminal opening 608. The first flange portion 620 may extend radially with respect to a first terminal center line TX1 of the first terminal body 601 parallel to the third direction.

The first flange portion 620 is exposed to the outside of the cap plate 501. In an embodiment, the first flange portion 620 may have a quadrangular planar shape as shown in FIG. 2. However, for example, the first flange portion 620 may have a planar shape, such as a circular shape, that is different from the planar shape shown FIG. 2. In an embodiment, the first terminal 600 may be formed by pressing a metal plate formed of a material such as steel or an aluminum alloy.

The first connection plate 400 may be located between the electrode assembly 200 and the cap plate 501 in the internal space 160 of the case 101. The first connection plate 400 includes a first electrode tab coupling portion 405 and a first terminal coupling portion 401.

In an embodiment, the first electrode tab coupling portion 405 is welded to the first electrode tab 310 or 320. A pair of first electrode tab coupling portions 405 are provided. The pair of first electrode tab coupling portions 405 may be spaced apart from each other with the first terminal coupling portion 401 interposed therebetween.

Among the pair of first electrode tab coupling portions 405, a first electrode tab coupling portion 405 that is relatively closer to the second terminal 700 is electrically bonded to the first inner electrode tab 310 through welding, and another first electrode tab coupling portion 405 is electrically bonded to the first outer electrode tab 320 through welding.

The first terminal coupling portion 401 is welded to the first plate coupling portion 610. The first terminal coupling portion 401 and the first plate coupling portion 610 may be bonded through, for example, laser welding.

The secondary battery 100 may further include a first weld 680 formed by partially melting and integrally curing the first plate coupling portion 610 and the first terminal coupling portion 401. The first weld 680 may extend along a closed curve path. For example, the first weld 680 may extend along a circular path.

In an embodiment, the first weld 680 extends along a circular path, and a diameter DW1 of the circular path of the first weld 680 may be in a range of 4 mm to 8 mm. If the diameter DW1 of the circular path of the first weld 680 is smaller than 4 mm, a bonding strength of the first weld 680 is weak, and the first plate coupling portion 610 and the first terminal coupling portion 401 may be easily separated.

On the other hand, if the diameter DW1 of the circular path of the first weld 680 is greater than 8 mm, the first terminal coupling portion 401 or the first plate coupling portion 610 may be deformed by heat energy generated during a welding process.

In an embodiment, a thickness BT1 of the first plate coupling portion 610 and a thickness PT1 of the first terminal coupling portion 401 may each be in a range of 0.5 mm to 1.0 mm. If the thickness BT1 of the first plate coupling portion 610 and the thickness PT1 of the first terminal coupling portion 401 are smaller than 0.5 mm, the first terminal coupling portion 401 or the first plate coupling portion 610 may be deformed due to excessive heat energy generated during a welding process.

If the thickness BT1 of the first plate coupling portion 610 and the thickness PT1 of the first terminal coupling portion 401 are greater than 1 mm, a welding spatter generated during welding may increase excessively, which weakens welding strength between the first plate coupling portion 610 and the first terminal coupling portion 401 and increases a risk of a safety accident.

In an embodiment, a gap GP1 between the insulator 580 and the first connection plate 400 may be in a range of 0.5 mm to 1.0 mm. If the gap GP1 is less than 0.5 mm, the insulation between the cap plate 501 and the first connection plate 400 may be easily damaged and may result in a short circuit. If the gap GP1 is greater than 1.0 mm, a volume of the secondary battery 100 may excessively increase, and appearance defects may occur in the secondary battery 100.

The battery pack 1 may further include a first coupling bolt 60 that passes through a side of the busbar 50 and is coupled to the first terminal 600 to electrically connect the busbar 50 to the first terminal 600. The first coupling bolt 60 may include a first bolt head 61 and a first bolt body 63.

The first bolt body 63 may be a cylindrical portion with a circular cross-sectional shape. The first bolt head 61 may have a diameter that is greater than a diameter of the first bolt body 63 and may be connected to the first bolt body 63 in a stepwise manner. For example, the first bolt head 61 may be connected to an upper end portion of the first bolt body 63.

In an embodiment, a shape of the first terminal body 601 is a tubular shape, and the first terminal 600 may further include a first female screw pattern 605 formed on an inner circumferential surface of the first terminal body 601. The first bolt body 63 may include a first male screw pattern 65, which engages with the first female screw pattern 605, on an outer circumferential surface.

A size of an inner diameter HD1 of the first terminal body 601 may be equal to a size of the diameter of the first bolt body 63 such that the first female screw pattern 605 engages with the first male screw pattern 65. In an embodiment, a minimum size of the inner diameter HD1 of the first terminal body 601 may have a value that is greater than the size of the diameter DW1 of the circular path of the first weld 680 by 2 mm. In an embodiment, a maximum size of the inner diameter HD1 of the first terminal body 601 may be 10 mm.

If the minimum value of the inner diameter HD1 of the first terminal body 601 is smaller than a value that is greater than the diameter DW1 of the circular path of the first weld 680 by 2 mm, it may be difficult to form the first weld 680 having sufficient welding strength by irradiating a laser onto the first plate coupling portion 610.

If the maximum size of the inner diameter of the first terminal body 601 is greater than 10 mm, distortion may occur when the first terminal 600 is machined to form the first female screw pattern 605 on the inner circumferential surface of the first terminal body 601.

A first busbar hole 53, which has an inner diameter to allow the first bolt body 63 to pass therethrough and not allow the first bolt head 61 to pass therethrough, may be formed in a side of the busbar 50.

In a state in which the first bolt body 63 passes through the first terminal opening 608 and is fitted into the first terminal opening 608, if the first bolt body 63 is rotated such that an area in which the first male screw pattern 65 and the first female screw pattern 605 engage with each other is expanded, the first bolt head 61 may come into contact (e.g., close contact) with a side of the busbar 50 in which the first busbar hole 53 is formed.

Thus, a side of the busbar 50 is in close contact with the first terminal 600. The first bolt head 61 presses one side of the busbar 50 to be in contact (e.g., close contact) with the first terminal 600. For example, the first flange portion 620 may be in contact (e.g., close contact) with a side of the busbar 50. Accordingly, the electrode assembly 200, the first connection plate 400, the first terminal 600, and the busbar 50 are electrically connected.

The second terminal 700 includes a second terminal body 701 and a second plate coupling portion 710. The second terminal body 701 passes through the cap plate 501. The second plate coupling portion 710 is located in the internal space 160 of the case 101 and is connected to the second terminal body 701.

In an embodiment, a shape of the second terminal body 701 may be a pipe shape and may extend in the third direction. A cross-sectional shape of the second terminal body 701 may be a circular shape. An end portion of the second terminal body 701 may be closed and blocked by the second plate coupling portion 710 inside the case 101. Another end portion of the second terminal body 701 may be located outside the case 101 and may open to the outside of the case 101.

For example, an end portion of the second terminal body 701 may be a lower end portion located at a lower side in the third direction, and another end portion of the second terminal body 701 may be an upper end portion located at an upper side in the third direction. An open second terminal opening 708 may be formed in the upper end portion of the second terminal body 701.

In an embodiment, a planar shape of the second plate coupling portion 710 may be a circular shape. The second plate coupling portion 710 may be a flat plate-shaped portion with a constant thickness BT2. The second terminal 700 may further include a second flange portion 720 extending radially from the other end portion of the second terminal body 701.

The second flange portion 720 may be bent at an upper end portion of the second terminal body 701 and may extend in a direction orthogonal to the third direction without closing the second terminal opening 708. The second flange portion 720 may extend radially with respect to a second terminal center line TX2 of the second terminal body 701 parallel to the third direction.

The second flange portion 720 is exposed to the outside of the cap plate 501. In an embodiment, the second flange portion 720 may have a quadrangular planar shape as shown in FIG. 2. However, for example, the second flange portion 720 may have a planar shape such as a circular shape that is different from the planar shape shown FIG. 2. The second terminal 700 may be formed by pressing a metal plate formed of a material such as steel or aluminum alloy.

The second connection plate 450 may be located between the electrode assembly 200 and the cap plate 501 in the internal space 160 of the case 101. The second connection plate 450 includes a second electrode tab coupling portion 455 and a second terminal coupling portion 451.

The second electrode tab coupling portion 455 is welded to the second electrode tab 330 or 340. A pair of second electrode tab coupling portions 455 are provided. The pair of second electrode tab coupling portions 455 may be spaced apart from each other with the second terminal coupling portion 451 interposed therebetween.

Among the pair of second electrode tab coupling portions 455, a second electrode tab coupling portion 455 that is relatively closer to the second terminal 700 is electrically bonded to the second inner electrode tab 330 through welding, and another second electrode tab coupling portion 455 is electrically bonded to the second outer electrode tab 340 through welding.

The second terminal coupling portion 451 is welded to the second plate coupling portion 710. The second terminal coupling portion 451 and the second plate coupling portion 710 may be bonded through, for example, laser welding.

The secondary battery 100 may further include a second weld 780 formed by partially melting and integrally curing the second plate coupling portion 710 and the second terminal coupling portion 451. The second weld 780 may extend along a closed curve path. For example, the second weld 780 may extend along a circular path.

In an embodiment, the second weld 780 extends along a circular path, and a a diameter DW2 of the circular path of the second weld 780 may be in a range of 4 mm to 8 mm. If the size of the diameter DW2 of the circular path of the second weld 780 is less than 4 mm, bonding strength of the second weld 780 is weak, and the second plate coupling portion 710 and the second terminal coupling portion 451 may be easily separated.

On the other hand, if the size of the diameter DW2 of the circular path of the second weld 780 is greater than 8 mm, the second terminal coupling portion 451 or the second plate coupling portion 710 may be deformed by the heat energy generated during a welding process.

In an embodiment, a thickness BT2 of the second plate coupling portion 710 and a thickness PT2 of the second terminal coupling portion 451 may each be in a range of 0.5 mm to 1.0 mm. If the thickness BT2 of the second plate coupling portion 710 and the thickness PT2 of the second terminal coupling portion 451 are less than 0.5 mm, the second terminal coupling portion 451 or the second plate coupling portion 710 may be deformed due to excessive heat energy generated during a welding process.

If the thickness BT2 of the second plate coupling portion 710 and the thickness PT2 of the second terminal coupling portion 451 are greater than 1 mm, a welding spatter generated during welding may increase excessively, which weakens welding strength between the second plate coupling portion 710 and the second terminal coupling portion 451 and increases a risk of a safety accident.

In an embodiment, a gap GP2 between the insulator 580 and the second connection plate 450 may be in a range of 0.5 nm to 1.0 mm. If the gap GP2 is less than 0.5 mm, the insulation between the cap plate 501 and the second connection plate 450 may be easily damaged and result in a short circuit. If the gap GP2 is greater than 1.0 mm, a volume of the secondary battery 100 may excessively increase, and appearance defects may occur in the secondary battery 100.

The battery pack 1 may further include a second coupling bolt 80 that passes through one side of the busbar 50 and is coupled to the second terminal 700 to electrically connect the busbar 50 to the second terminal 700. The second coupling bolt 80 may include a second bolt head 81 and a second bolt body 83.

The second bolt body 83 may be a cylindrical portion with a circular cross-sectional shape. The second bolt head 81 may have a diameter that is greater than a diameter of the second bolt body 83 and may be connected to the second bolt body 83 in a stepwise manner. For example, the second bolt head 81 may be connected to an upper end portion of the second bolt body 83.

In a case in which a shape of the second terminal body 701 is a tubular shape, the second terminal 700 may further include a second female screw pattern 705 formed on an inner circumferential surface of the second terminal body 701. The second bolt body 83 may include a second male screw pattern 85, which engages with the second female screw pattern 705, on an outer circumferential surface.

A size of an inner diameter HD2 of the second terminal body 701 may be equal to a size of a diameter of the second bolt body 83 such that the second female screw pattern 705 engages with the second male screw pattern 85. In an embodiment, a minimum size of the inner diameter HD2 of the second terminal body 701 may be greater than the size of the diameter DW2 of the circular path of the second weld 780 by 2 mm. In an embodiment, a maximum size of the inner diameter HD2 of the second terminal body 701 may be 10 mm.

If the minimum value of the inner diameter HD2 of the second terminal body 701 is smaller than a value that is greater than the diameter DW2 of the circular path of the second weld 780 by 2 mm, it may be difficult to form a second weld 780 having sufficient welding strength by radiating a laser onto the second plate coupling portion 710.

If the maximum size of the inner diameter HD2 of the second terminal body 701 is greater than 10 mm, distortion may occur when the second terminal 700 is machined to form the second female screw pattern 705 on the inner circumferential surface of the second terminal body 701.

A second busbar through-hole 57, which has an inner diameter to allow the second bolt body 83 to pass therethrough and not allow the second bolt head 81 to pass therethrough, may be formed in the other side of the busbar 50.

In a state in which the second bolt body 83 passes through the second terminal opening 708 and is fitted into the second terminal opening 708, if the second bolt body 83 is rotated such that an area in which the second male screw pattern 85 and the second female screw pattern 705 engage with each other is expanded, the second bolt head 81 may come into contact (e.g., close contact) with the other side of the busbar 50 in which the second busbar through-hole 57 is formed.

Thus, the other side of the busbar 50 is in contact (e.g., close contact) with the second terminal 700. The second bolt head 81 presses the other side of the busbar 50 to be in contact (e.g., close contact) with the second terminal 700. For example, the second flange portion 720 may be in contact (e.g., close contact) with the other side of the busbar 50. Accordingly, the electrode assembly 200, the second connection plate 450, the second terminal 700, and the busbar 50 are electrically connected.

In an embodiment, the first coupling bolt 60 and the second coupling bolt 80 may each include bolt cores 70 and 90 including a steel material, and conduction promotion layers 72 and 92 including a material having higher conductivity than the steel material.

The conduction promotion layers 72 and 92 may be stacked on outer surfaces of the bolt cores 70 and 90 to surround the bolt cores 70 and 90 such that the bolt cores 70 and 90 are not exposed. The conduction promotion layers 72 and 92 may be stacked on the outer surfaces of the first and second bolt heads 61 and 81 and outer surfaces of the first and second bolt bodies 63 and 83.

For example, the conduction promotion layers 72 and 92 may include silver (Ag). In an embodiment, the conduction promotion layers 72 and 92 including silver (Ag) may be formed on the outer surfaces of the bolt cores 70 and 90 through a plating method.

Due to the conduction promotion layer 72 of the first coupling bolt 60, the electrical resistance between the first terminal 600 and the busbar 50 can be further reduced and the flow rate of the current can be increased. Due to the conductive layer 92 of the second coupling bolt 80, the electrical resistance between the second terminal 700 and the busbar 50 can be further reduced and the flow rate of the current can be increased. Accordingly, the charging/discharging speed and safety of the secondary battery 100 and the battery pack 1 can be improved.

According to one or more embodiments of the present invention, a current path between a plate and a busbar welded to an electrode tab of an electrode assembly is simplified, and an area of a weld is reduced, thereby reducing electrical resistance. Therefore, a secondary battery and a battery pack can be quickly charged and discharged.

According to one or more embodiments of the present invention, a terminal and a busbar can be coupled through a coupling bolt without welding. Therefore, a size of a terminal can be miniaturized or reduced, and costs of a secondary battery and a battery pack can be reduced.

However, aspects and features of the present invention are not limited to those described above and other aspects and features not mentioned will be clearly understood by those skilled in the art from the detailed description provided above.

## Claims

1. A secondary battery (100) comprising:
a case (101) having an opening (165);
an electrode assembly (200) accommodated in the case (101);
an electrode tab (310, 320) electrically connected to the electrode assembly (200);
a cap plate (501) to close the opening (165);
a terminal (600, 700) comprising a terminal body (601, 701) passing through the cap plate (501), and a plate coupling portion (610, 710) located inside the case (101) and connected to the terminal body (601, 701); and
a connection plate (400, 450) comprising an electrode tab coupling portion (405, 455) welded to the electrode tab (310, 320), and a terminal coupling portion (401, 451) welded to the plate coupling portion (610, 710).

2. The secondary battery (100) according to claim 1, wherein a shape of the terminal body (601, 701) is a tubular shape, and
the terminal body (601, 701) has an end portion which is closed and blocked by the plate coupling portion (610, 710) inside the case (101), and another end portion which is located outside the case (101) and opens to an outside of the case (101).

3. The secondary battery (100) according to claims 1 or 2, wherein the terminal (600, 700) comprises a female screw pattern (605, 705) on an inner circumferential surface of the terminal body (601, 701).

4. The secondary battery (100) according to any of claims 1 to 3, wherein the terminal (600, 700) further comprises a flange portion (620, 720) extending radially from the another end portion of the terminal body (601, 701).

5. A battery pack (1) comprising:
a housing (10); and
a plurality of secondary batteries (100) accommodated in the housing (10),
wherein each of the secondary batteries (100) comprises:
a case (101) having an opening (165);
an electrode assembly (200) accommodated in the case (101);
a first electrode tab (310, 320) electrically connected to the electrode assembly (200);
a cap plate (501) to close the opening (165);
a first terminal (600) comprising a first terminal body (601) passing through the cap plate (501), and a first plate coupling portion (610) located inside the case (101) and connected to the first terminal body (601); and
a first connection plate (400) comprising a first electrode tab coupling portion (405) welded to the first electrode tab (310, 320), and a first terminal coupling portion (401) welded to the first plate coupling portion (610).

6. The battery pack (1) according to claim 5, wherein a secondary battery (100) of the plurality of secondary batteries (100) further comprises a first weld (680) which is formed by partially melting and integrally curing the first plate coupling portion (610) and the first terminal coupling portion (401) and extends along a closed curve path.

7. The battery pack (1) according to claims 5 or 6, wherein the secondary battery (100) further comprises a second electrode tab (330, 340) electrically connected to the electrode assembly (200), a second terminal (700) comprising a second terminal body (701) passing through the cap plate (501) and a second plate coupling portion (710) located inside the case (101) and connected to the second terminal body (701), and a second connection plate (450) comprising a second electrode tab coupling portion (455) welded to the second electrode tab (330, 340) and a second terminal coupling portion (451) welded to the second plate coupling portion (710), and
the battery pack (1) further comprises a busbar (50) to connect the first terminal (600) of a first secondary battery (100) of the plurality of secondary batteries to the second terminal (700) of a second secondary battery (100) of the plurality of secondary batteries.

8. The battery pack (1) according to claim 7, wherein the secondary battery (100) further comprises a second weld (780) which is formed by partially melting and integrally curing the second plate coupling portion (710) and the second terminal coupling portion (451) and extends along a closed curve path.

9. The battery pack (1) according to claims 7 or 8, further comprising a first coupling bolt (60) which passes through a side of the busbar (50) and is coupled to the first terminal (600) such that the busbar (50) is electrically connectable to the first terminal (600).

10. The battery pack (1) according to any of claims 5 to 9, wherein a shape of the first terminal body (601) is a tubular shape, and
the first terminal body (601) has an end portion which is closed and blocked by the first plate coupling portion (610) inside the case (101), and another end portion which is located outside the case (101) and opens to an outside of the case (101).

11. The battery pack (1) according to claims 9 or 10, wherein the first terminal (600) comprises a first female screw pattern (605) on an inner circumferential of the first terminal body (601), and
the first coupling bolt (60) comprises a first bolt body (63) comprising a first male screw pattern (65) configured to engage with the first female screw pattern (605), and a first bolt head (61) which is connected to the first bolt body (63) in a stepwise manner and configured to press the one side of the busbar (50) to be in contact with the first terminal (600).

12. The battery pack (1) according to any of claims 7 to 11, further comprising a second coupling bolt (80) which passes through the another side of the busbar (50) and is coupled to the second terminal (700) such that the busbar (50) is electrically connectable to the second terminal (700).

13. The battery pack (1) according to any of claims 7 to 12, wherein a shape of the second terminal body (701) is a tubular shape, and
the second terminal body (701) has an end portion which is closed and blocked by the second plate coupling portion (710) inside the case (101), and another end portion which is located outside the case (101) and opens to an outside of the case (101).

14. The battery pack (1) according to claims 12 or 13, wherein the second terminal (700) comprises a second female screw pattern (705) on an inner circumferential of the second terminal body (701), and
the second coupling bolt (80) comprises a second bolt body (83) comprising a second male screw pattern (85) configured to engage with the second female screw pattern (705), and a second bolt head (81) which is connected to the second bolt body (83) in a stepwise manner and configured to press the another side of the busbar (50) to be in contact with the second terminal (700).

15. The battery pack (1) according to any of claims 9 to 14, wherein the first coupling bolt (60) comprises:
a bolt core (70) including a steel material; and
a conduction promotion layer (72) which is stacked to surround the bolt core (70) and comprises a material having higher conductivity than the steel material.
